# FASCICULE DE BREVET EUROPEEN

(11) **EP 1 146 521 B1**
(45) Date de publication et mention de la délivrance du brevet: **09.07.2003**
(21) Numéro de dépôt: 01400180.4
(22) Date de dépôt: 22.01.2001
(51) Int. Cl.: G21C 17/00

(54) **Dispositif de mesure du temps de chute de barres de commande à l'intérieur du coeur d'un réacteur nucléaire**
Vorrichtung für die Messung der Steuerstabeintrittszeit in eine Kernreaktorspaltzone
Installation for measuring a control rod dropping time in a nuclear reactor core

(30) Priorité: 14.04.2000 FR 0004868
(43) Date de publication de la demande: 17.10.2001
(73) Titulaire: Framatome ANP, 92080 Paris La Defense (FR)
(72) Inventeur: Halluin, Hervé, 6200 Arras (FR); Paris, Philippe, 94350 Villiers sur Marne (FR)
(74) Mandataire: Bouget, Lucien

(56) Documents cités:
- WO-A-98/52196
- DD-A- 250 201
- FR-A- 2 770 329
- US-A- 5 006 301

## Description

L'invention concerne un dispositif de mesure du temps de chute de barres de commande à l'intérieur du coeur d'un réacteur nucléaire et en particulier à l'intérieur du coeur d'un réacteur nucléaire refroidi par de l'eau sous pression.

Les réacteurs nucléaires tels que les réacteurs nucléaires refroidis par de l'eau sous pression comportent une cuve fermée à sa partie supérieure par un couvercle, renfermant le coeur du réacteur qui est constitué par des assemblages de combustible, de forme générale prismatique, placés dans des dispositions adjacentes, avec leurs axes verticaux.

Chacun des assemblages de combustible comporte un ensemble de tubes-guides verticaux dans chacun desquels on peut déplacer un crayon d'une grappe absorbante d'une barre de commande de la réactivité du coeur du réacteur nucléaire.

Pour réaliser le réglage de la réactivité du coeur et le pilotage du réacteur nucléaire, on utilise des barres de commande qui sont déplacées dans un certain nombre d'assemblages répartis suivant la section transversale du coeur.

Par exemple, pour un réacteur nucléaire dont le coeur comporte deux cent cinq assemblages de combustible, on utilise soixante-treize barres de commande qui sont déplacées dans soixante-treize assemblages de combustible du coeur.

Chacune des barres de commande comporte une grappe de commande constituée par des crayons absorbants reliés, dans des dispositions parallèles entre elles, à un dispositif de fixation et de suspension appelé pommeau qui est relié à une tige de commande réalisée sous forme cannelée, afin de déplacer les barres de commande pas à pas suivant la hauteur du coeur du réacteur nucléaire, pour régler la réactivité.

Les barres de commande sont déplacées suivant la hauteur du coeur par des mécanismes qui sont fixés sur des enceintes tubulaires verticales disposées au-dessus du couvercle de la cuve. Les tiges de commande qui sont déplacées dans une disposition coaxiale à l'intérieur des enceintes tubulaires coopèrent, par l'intermédiaire de leurs cannelures, avec des cliquets des mécanismes permettant le déplacement de la barre de commande.

Les barres de commande du réacteur nucléaire ont également une fonction de sûreté, puisqu'elles doivent permettre de réaliser des arrêts d'urgence du réacteur nucléaire, par retombée des barres de commande en position d'insertion maximale à l'intérieur du coeur du réacteur nucléaire.

Pour cela, le mécanisme des barres de commande réalise une libération de la tige de commande, de sorte que la barre et la tige de commande peuvent retomber sous l'effet de la gravité à l'intérieur du coeur du réacteur nucléaire.

De manière à contrôler l'efficacité du dispositif d'arrêt d'urgence du réacteur nucléaire, il est nécessaire de connaître et de contrôler le temps de chute des barres de commande à l'intérieur du coeur du réacteur nucléaire, cette opération de mesure et de contrôle devant être effectuée périodiquement, par exemple après un arrêt du réacteur nucléaire pour rechargement et maintenance, avant d'assurer le redémarrage du réacteur nucléaire.

Pour mesurer le temps de chute des barres de commande d'un réacteur nucléaire, on utilise l'instrumentation de mesure de position des barres de commande qui comporte en particulier des bobinages de mesure entourant chacune des enceintes tubulaires disposées verticalement au-dessus du couvercle de la cuve, sur lesquelles sont fixés les mécanismes de déplacement des grappes de commande, par l'intermédiaire de la tige de commande qui est montée mobile à l'intérieur de l'enceinte tubulaire. Les bobinages de mesure des positions des barres de commande comportent un bobinage primaire disposé sensiblement sur toute la longueur axiale de l'enceinte tubulaire et une pluralité de bobinages secondaires espacés les uns des autres suivant la direction axiale de l'enceinte tubulaire. La présence ou non de la tige de commande dans une zone de l'enceinte tubulaire à l'intérieur d'un enroulement secondaire se traduit par des valeurs différentes de la tension induite dans le bobinage secondaire par le bobinage primaire.

On peut ainsi déterminer la position de la tige de commande à l'intérieur de l'enceinte tubulaire et, à partir de cette position, la position de la grappe de commande à l'intérieur du coeur du réacteur nucléaire.

Lors de la retombée des grappes de commande, le déplacement de la tige de commande dans la direction axiale à l'intérieur de l'enceinte tubulaire produit une tension induite à l'intérieur du bobinage primaire, cette tension induite variant en fonction de la vitesse de déplacement de la tige de commande et de la longueur du tronçon de la tige de commande à l'intérieur du bobinage primaire. Par enregistrement de la tension induite dans le bobinage primaire, lors de la chute de la barre de commande, depuis la position haute, c'est-à-dire depuis la position totalement extraite de la grappe de commande, on peut déterminer le temps de chute de la barre de commande.

Pour effectuer les mesures sur les différentes barres de commande du réacteur nucléaire, on doit effectuer des raccordements provisoires sur chacun des câbles reliant un dispositif de mesure de position d'une barre de commande à une unité de recueil des signaux de mesure, pour capter la tension aux bornes du bobinage primaire.

Les mesures sont réalisées successivement sur des sous-groupes de barres de commande répartis dans le coeur du réacteur nucléaire.

Par exemple, pour un réacteur nucléaire comportant soixante-treize barres de commande, les mesures sont réalisées successivement pour des sous-groupes de quatre barres de commande qui sont placées dans quatre parties du coeur appelées quadrants séparés les uns des autres par deux plans de symétrie à 90° passant par l'axe du coeur du réacteur nucléaire. On effectue ainsi dix-neuf mesures successives pour déterminer l'ensemble des temps de chute des soixante-treize barres de commande du réacteur nucléaire.

Le temps de réalisation de l'essai est donc assez long, compte tenu du fait qu'il est nécessaire d'effectuer un raccordement particulier au dispositif d'essai pour chacune des mesures et une remise à la configuration initiale de fonctionnement du dispositif, entre deux mesures successives.

Les mesures de temps de chute interviennent avant le démarrage du réacteur nucléaire et se situent sur le chemin critique de l'arrêt de tranche, ce qui représente un coût important, du fait de l'augmentation du temps d'arrêt de la tranche du réacteur nucléaire.

De plus, les opérations de raccordement provisoire créent un risque de défaillance de la connectique sur un matériel qui est classé pour la sûreté.

On ne connaissait pas jusqu'ici de dispositif de mesure permettant d'effectuer la mesure pour l'ensemble des barres de commande du réacteur nucléaire et d'éviter des opérations de raccordement préalables à chacune des mesures.

Le but de l'invention est donc de proposer un dispositif de mesure du temps de chute de barres de commande à l'intérieur du coeur d'un réacteur nucléaire comportant une cuve fermée à sa partie supérieure par un couvercle et renfermant le coeur du réacteur constitué par des assemblages de combustible dans des dispositions adjacentes verticales et comportant des tubes de guidage verticaux pour des crayons absorbants d'une pluralité de barres de commande constituées chacune par une grappe de crayons absorbants et une tige de commande reliée, à l'une de ses extrémités, à la grappe de commande, une pluralité d'enceintes tubulaires disposées verticalement au-dessus du couvercle de la cuve comportant chacune un mécanisme de déplacement d'une barre de commande par l'intermédiaire de sa tige de commande verticale mobile dans la direction axiale de l'enceinte tubulaire et de libération de la barre de commande pour assurer sa chute en position d'insertion maximale dans le coeur du réacteur nucléaire, au moins un bobinage électrique de mesure entourant chaque enceinte tubulaire, sensiblement suivant toute sa longueur axiale, relié à un câble de captage d'une tension électrique aux bornes du bobinage, les barres de commande étant regroupées en sous-ensembles et chaque bobinage électrique de chacune des barres de commande d'un sous-ensemble étant relié par son câble à une unité de recueil des signaux de mesure, ce dispositif permettant d'effectuer la mesure pour l'ensemble des barres de commande du réacteur nucléaire en une seule fois et sans avoir à effectuer d'opération préalable de raccordement de câble de mesure.

Dans ce but, le dispositif de mesure comporte de plus :
- un module d'acquisition de signaux de mesure en temps réel,
- des moyens de connexion des câbles de captage de chacun des bobinages électriques de mesure au module d'acquisition pour la réception de signaux de mesure de tension aux bornes de chacun des bobinages électriques, et
- des moyens d'exploitation des signaux de tension reliés au module d'acquisition pour mesurer le temps de chute des barres de commande du réacteur nucléaire.

Afin de bien faire comprendre l'invention, on va maintenant décrire, à titre d'exemple, en se référant aux figures jointes en annexe, un dispositif suivant l'invention pour la mesure des temps de chute de barres de commande d'un réacteur nucléaire refroidi par de l'eau sous pression et l'utilisation de ce dispositif de mesure.

La figure 1 est une vue schématique en coupe verticale d'une cuve d'un réacteur nucléaire à eau sous pression et de moyens de réglage de la réactivité du coeur du réacteur nucléaire.

La figure 2 est une vue en coupe axiale d'une enceinte tubulaire et de mécanismes de déplacement d'une tige de commande à l'intérieur de l'enceinte tubulaire.

La figure 3 est une vue en coupe partielle agrandie d'une partie de l'enceinte représentée sur la figure 2 et de ses bobinages de mesure de position d'une barre de commande.

La figure 4 est une vue schématique d'un ensemble suivant l'art antérieur de traitement des mesures de position de barres de commande d'un réacteur nucléaire, pour la protection du réacteur et la commande des déplacements des barres de commande.

La figure 5 est une vue schématique, analogue à la vue de la figure 4, montrant un dispositif de mesure de temps de chute des barres de commande suivant l'invention.

La figure 6 est une vue de détail des moyens de connexion d'un câble de mesure du dispositif suivant l'invention.

La figure 7 est un diagramme donnant la tension induite dans un bobinage primaire de mesure d'une enceinte tubulaire d'une barre de commande, en fonction du temps, pendant la chute d'une barre de commande.

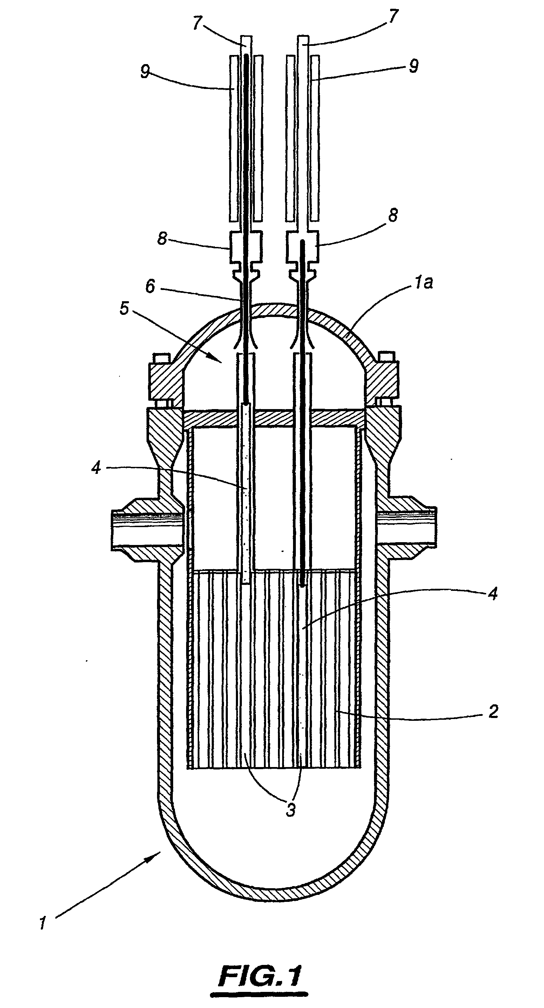

Sur la figure 1, on a représenté la cuve 1 d'un réacteur nucléaire à eau sous pression qui renferme le coeur 2 du réacteur et qui est fermée à sa partie supérieure par un couvercle 1a de forme sensiblement hémisphérique.

Le coeur 2 du réacteur nucléaire est constitué par des assemblages de combustible placés verticalement dans des dispositions adjacentes et qui comportent des moyens de guidage de crayons absorbants de barres de commande dont on réalise le déplacement à l'intérieur du coeur 2 du réacteur nucléaire dans la direction verticale, pour régler la réactivité du coeur.

Sur la figure 1, on a représenté de manière schématique deux ensembles 3 de guidage de crayons absorbants de deux assemblages du coeur du réacteur nucléaire à l'intérieur de chacun desquels on déplace une grappe de crayons absorbants 4 représentée conventionnellement sous forme d'un ensemble massif.

En réalité, la grappe de crayons absorbants 4 est constituée par un ensemble de crayons parallèles et l'ensemble de guidage 3 est constitué par un ensemble de tubes-guides de l'assemblage de combustible dans lequel on déplace la grappe de crayons absorbants, chacun des crayons absorbants de la grappe étant guidé à l'intérieur de l'assemblage de combustible par un tube-guide.

Chacune des grappes de crayons absorbants 4 est reliée à sa partie supérieure à une tige de commande 6 disposée dans le prolongement axial de la grappe 4.

L'ensemble constitué par la grappe de crayons absorbants et la tige de commande 6 constitue une barre de commande 5 de la réactivité dans le coeur du réacteur nucléaire.

Sur la figure 1, on a représenté l'une des grappes de crayons absorbants 4 en position basse, totalement insérée dans le coeur et la seconde grappe de crayons absorbants 4 en position haute, totalement extraite du coeur 2.

Comme il sera expliqué plus loin, les tiges de commande 6 sont des tiges cannelées, dont la cannelure définit une denture sur toute la longueur de la tige de commande.

Les tiges de commande 6 des barres de commande 5 se déplacent, entre la position haute totalement extraite de la barre de commande et la position basse totalement insérée, à l'intérieur d'enceintes tubulaires 7 fixées dans la direction verticale au-dessus du couvercle 1a de la cuve, à l'aplomb du tube de guidage de grappe et dans la partie supérieure de la cuve du réacteur nucléaire.

Chacune des enceintes tubulaires 7 comporte un mécanisme 8 de déplacement de la barre de commande 5 correspondante, par l'intermédiaire de sa tige de commande cannelée 6.

Les mécanismes 8 sont des mécanismes à cliquets qui coopèrent avec la denture de la tige de commande cannelée 6 pour déplacer pas à pas la tige de commande à l'intérieur de l'enceinte tubulaire 7 et la grappe de commande 4 à l'intérieur du coeur 2 du réacteur nucléaire pour réaliser le réglage de la réactivité du coeur.

Les mécanismes 8 comportent des cliquets de déplacement et des cliquets de retenue des barres de commande par l'intermédiaire des tiges de commande, l'ouverture des cliquets de retenue permettant une libération de la tige de commande et de la barre de commande depuis une position haute, la barre de commande pouvant ensuite retomber en position d'insertion maximale dans le coeur du réacteur nucléaire sous l'effet de la gravité.

Comme indiqué plus haut, il importe de connaître, avant le démarrage ou le redémarrage d'un réacteur nucléaire, le temps de chute des barres de commande qui constituent des éléments de sûreté du réacteur nucléaire.

Autour des enceintes tubulaires 7 de déplacement des tiges de commande 6 des barres de commande 5, sont disposés, sur une partie substantielle de la longueur de l'enceinte tubulaire dans la direction axiale, au-dessus des mécanismes 8, des moyens 9 de mesure de la position de la tige de commande à l'intérieur de l'enceinte tubulaire 7 et donc de la grappe absorbante 4 de la barre de commande 5, à l'intérieur du coeur du réacteur nucléaire.

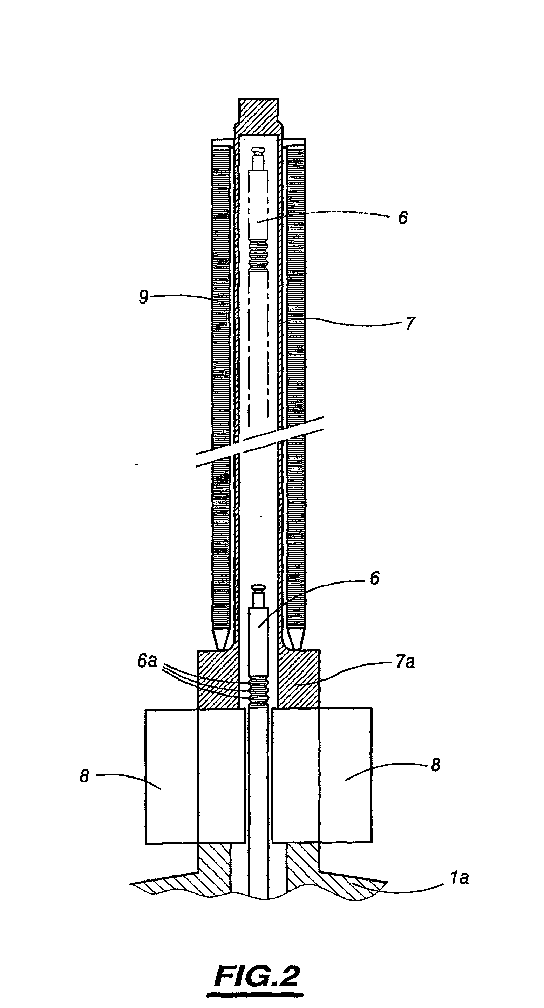

Sur la figure 2, on a représenté une enceinte tubulaire 7 dans laquelle se déplace une tige de commande cannelée 6 à l'extrémité inférieure de laquelle (non représentée) est fixée une grappe de commande.

L'enceinte tubulaire 7 est fixée dans le prolongement axial d'un élément tubulaire 7a fixé sur le couvercle 1a de la cuve et assurant la traversée de la tige de commande 6, sur lequel sont fixés les mécanismes 8 de déplacement de la barre de commande, par l'intermédiaire de la tige cannelée 6.

Les cliquets de retenue et de déplacement des mécanismes 8 de la barre de commande viennent en prise, à l'intérieur de la partie tubulaire 7a de l'enceinte 7, avec la denture 6a de la tige de commande cannelée 6.

Sur la figure 2, on a représenté en traits pleins la tige 6 dans sa position basse correspondant à la position totalement insérée de la grappe de crayons absorbants dans le coeur du réacteur nucléaire et en traits interrompus, la tige de commande 6 en position haute à l'intérieur de la partie supérieure de l'enceinte tubulaire 7.

La partie supérieure de l'enceinte tubulaire 7 permet d'assurer le déplacement de la tige de commande 6 suivant une longueur égale à la hauteur totale du coeur, c'est-à-dire sur une longueur de l'ordre de quatre à cinq mètres.

Le dispositif 9 de mesure de la position de la barre de commande est disposé autour de la partie supérieure de l'enceinte tubulaire 7 et sensiblement sur toute la longueur de cette partie supérieure, au-dessus des mécanismes 8.

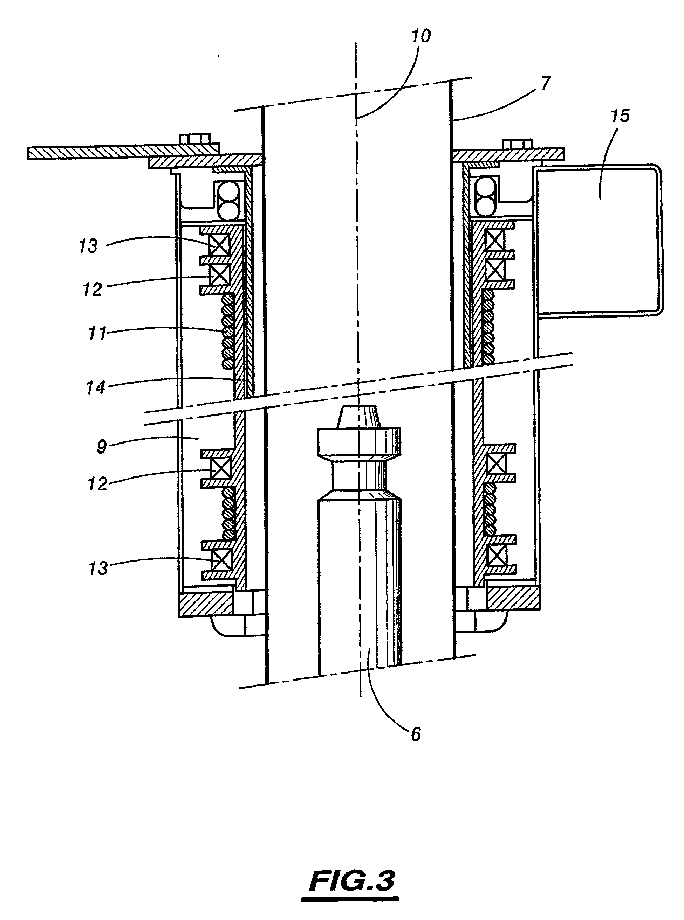

Comme il est visible sur la figure 3, le dispositif 9 de mesure de la position des barres de commande est disposé autour de l'enceinte tubulaire 7 sur laquelle il est fixé par l'intermédiaire de brides supérieure et inférieure. Le dispositifs de mesure 9 est disposé à l'intérieur d'une enveloppe de forme générale tubulaire délimitée par deux viroles cylindriques coaxiales dans une disposition coaxiale par rapport à l'enceinte tubulaire 7 dans laquelle la tige de commande 6 de la barre de commande se déplace dans la direction axiale 10.

Le dispositif de mesure 9 présente la forme générale d'un transformateur différentiel comportant un enroulement primaire 11 s'étendant sensiblement sur toute la longueur du dispositif de mesure, c'est-à-dire sensiblement sur toute la longueur axiale de l'enceinte tubulaire et des bobinages secondaires 12 répartis suivant la direction axiale 10 du dispositif de mesure, avec un espacement constant.

Le bobinage primaire 11 et les bobinages secondaires 12 ainsi que des bobinages auxiliaires d'extrémité 13, situés aux extrémités axiales du dispositif 9, sont disposés dans des cavités annulaires d'un support 14 placé dans une disposition coaxiale par rapport à l'enceinte tubulaire 7.

Les différents bobinages sont reliés à des lignes d'alimentation et de mesure, par l'intermédiaire d'un boîtier de connexion 15.

Le bobinage primaire 11 est alimenté en courant alternatif à une fréquence de 50 Hz, la tension dans le bobinage pouvant de plus être captée par l'intermédiaire d'un câble de captage relié au dispositif de connexion 15.

Chacun des bobinages secondaires 12 et des bobinages auxiliaires 13 est également relié à un câble de captage de la tension aux bornes du bobinage dont on assure la connexion à l'intérieur du dispositif de connexion 15.

La mesure des tensions induites par le bobinage primaire dans chacun des bobinages secondaires ou dans les bobinages secondaires placés en série permet de déterminer la position de la tige de commande 6 à l'intérieur de l'enceinte tubulaire 7 et donc de la barre de commande dans le coeur du réacteur nucléaire, la présence de la tige de commande 6 en face d'un bobinage secondaire 12 modifiant la réluctance du bobinage secondaire et donc le couplage du bobinage primaire et du bobinage secondaire.

De plus, la chute d'une barre de commande depuis sa position haute jusqu'à sa position basse dans le coeur du réacteur nucléaire se traduit par un déplacement de la tige de commande 6 à l'intérieur de l'enceinte 7, suivant la direction axiale 10, c'est-à-dire suivant la direction axiale du bobinage primaire 11. Il en résulte une tension induite dont l'enregistrement au cours du temps permet de déterminer le temps de chute de la barre de commande.

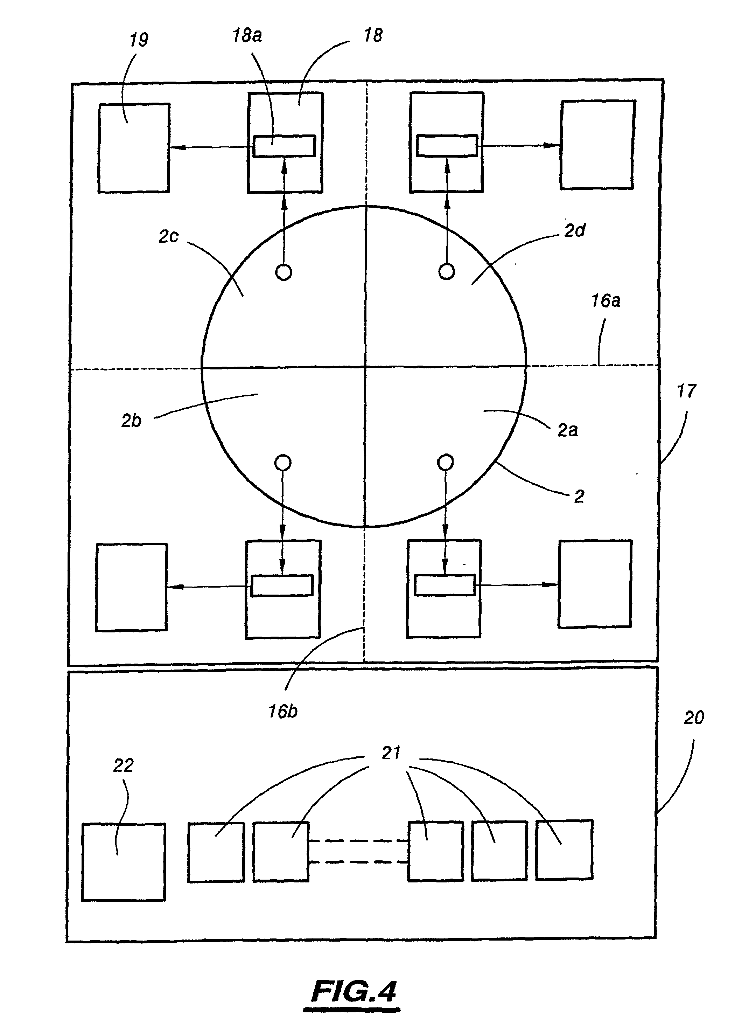

Sur la figure 4, on a représenté la section du coeur 2 d'un réacteur nucléaire à eau sous pression qui comporte quatre quadrants 2a, 2b, 2c, 2d, séparés les uns des autres par deux plans de symétrie verticaux de traces 16a et 16b sur la figure 4 perpendiculaires entre eux et passant par l'axe du coeur 2.

A l'intérieur des assemblages de combustible situés dans les quadrants 2a, 2b et 2c, on réalise le déplacement de dix-huit grappes absorbantes de dix-huit barres de commande de la réactivité du coeur, les assemblages de combustible dans lesquels on déplace les grappes absorbantes étant répartis suivant la surface des quadrants.

Dans le quatrième quadrant 2d, on déplace dix-neuf grappes absorbantes de dix-neuf barres de commande dans des assemblages de combustible répartis suivant la section du quadrant 2d.

Le pilotage du réacteur nucléaire est donc réalisé à partir de soixante-treize grappes de commande réparties en trois sous-ensembles de dix-huit grappes et un sous-ensemble de dix-neuf grappes.

Chaque sous-ensemble de barres de commande et de grappes absorbantes comporte ses propres moyens de recueil des mesures de position des barres de commande du sous-ensemble et de traitement de ces mesures pour la protection du réacteur nucléaire, pendant son fonctionnement.

L'ensemble des moyens de recueil des mesures de position et des moyens de protection du coeur est disposé dans des locaux de protection 17 placés autour de la cuve du réacteur nucléaire renfermant le coeur 2.

Les locaux de protection 17 renferment, pour chacun des sous-ensembles de barres de commande associé à un quadrant du coeur 2, des moyens 18 de recueil des mesures effectuées sur les dix-huit ou dix-neuf barres de commande du sous-ensemble.

Les moyens de recueil 18 des mesures de position des barres de commande d'un sous-ensemble sont appelés armoires IPB, ces armoires renfermant des capteurs d'instrumentation de position des barres (en abrégé IPB).

Les moyens de mesure de chacune des barres de commande sont reliées par des câbles de mesure à l'armoire IPB correspondante dans laquelle des capteurs de mesure 18a transfèrent les signaux de mesure à une unité d'acquisition et de traitement des données pour la protection du réacteur nucléaire 19 appelée armoire UATP.

Parmi les signaux transmis à l'armoire IPB figurent les signaux de tension des bobinages primaires des moyens de mesure de position de chacune des enceintes tubulaires de déplacement d'une tige de commande d'une barre de commande.

Les mesures de position effectuées sur les barres de commande sont également utilisées à l'intérieur d'un local 20 de commande de déplacement des barres de commande dans lequel sont disposées en particulier dix-neuf armoires 21 appelées armoires EEC1... armoires EEC19 qui renferment un ensemble électronique de commande des déplacements des barres de commande. Ces ensembles sont des unités du système de commande des déplacements des barres de commande qui délivrent des courants aux actionneurs des mécanismes de déplacement des barres de commande, selon les ordres reçus par les unités de pilotage.

A l'intérieur du local 20 est également disposée une unité de pilotage des groupes de puissance et une unité de pilotage des groupes d'arrêt et de la température dans le coeur du réacteur nucléaire. Ces unités 22 de commande du déplacement des grappes coordonnant le fonctionnement des ensembles électroniques de commande 21.

Lorsqu'on désire effectuer une mesure de temps de chute des grappes, il faut réaliser, au niveau de chacune des armoires IPB 18 de chacun des sous-ensembles de barres de commande, une connexion d'un câble de mesure de la tension aux bornes d'un bobinage primaire d'un moyen de mesure du déplacement d'une barre de commande. On peut ainsi réaliser, simultanément, une mesure de temps de chute de quatre barres de commande appartenant chacune à un sous-ensemble.

Il est donc nécessaire de réaliser dix-neuf fois la connexion des câbles de mesure et les opérations d'essai de chute des grappes, la dernière opération étant effectuée sur une seule barre de commande du dernier sous-ensemble situé dans le quadrant 2d.

Comme indiqué plus haut, cette procédure est longue et nécessite d'effectuer une connexion préalable à la mesure puis une remise dans leur état initial des connexions, au niveau de l'armoire IPB.

En outre, il n'est pas possible d'effectuer les connexions et donc les essais pendant le fonctionnement du réacteur nucléaire.

Dans le cas de la retombée accidentelle d'une barre de commande pendant le fonctionnement du réacteur nucléaire, on ne dispose pas de moyen pour mesurer le temps de chute de la barre de commande.

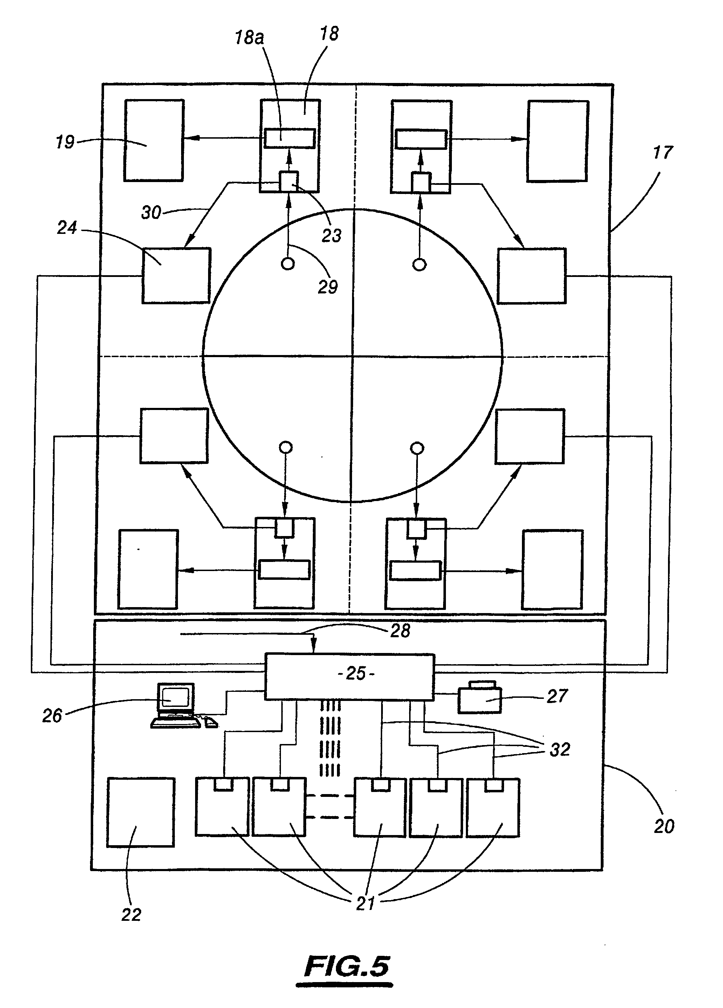

Sur la figure 5, on a représenté un dispositif de mesure suivant l'invention permettant de remédier aux inconvénients des opérations de mesure effectuées suivant l'art antérieur.

Le dispositif suivant l'invention a été représenté sur la figure 5 sur laquelle on a figuré les locaux de protection 17 et les locaux de commande 20 du déplacement des barres de commande, les éléments correspondants sur les figures 4 et 5 étant désignés par les mêmes repères.

Le dispositif de mesure suivant l'invention comporte, au niveau de chacune des armoires IPB de chacun des sous-ensembles de barres de commande recevant les signaux de mesure des barres de commande, un ensemble de moyens de connexion 23 réalisés chacun sous la forme d'un boîtier d'interface recevant, par des câbles de mesure de chacune des barres de commande du sous-ensemble, les signaux de mesure et en particulier les signaux de tension des bobinages primaires des moyens de mesure des positions des barres de commande.

Les boîtiers d'interface 23 reliés de manière permanente aux câbles de mesure des barres de commande du sous-ensemble permettent d'extraire, sans réaliser de connexion, les signaux de tension des bobinages primaires des moyens de mesure de position des barres de commande pour réaliser des mesures du temps de chute des barres de commande dans leur ensemble.

Chacun des boîtiers d'interface 23 d'une armoire IPB 18 d'un sous-ensemble de barres de commande est relié, par l'intermédiaire d'un coffret d'isolement 24, à un système 25 d'acquisition des signaux de mesure de tension des bobinages primaires en temps réel, disposé dans le local de commande de déplacement 20 des barres de commande.

De cette manière, le système 25 d'acquisition en temps réel des signaux de mesure peut recevoir simultanément les signaux de tension de l'ensemble des bobinages primaires des moyens de mesure de déplacement de l'ensemble des barres de commande, par exemple lors d'un essai pour la mesure du temps de chute des barres de commande. On ne réalise alors qu'une opération de libération et de chute des grappes, les tensions des bobinages primaires pouvant être captées simultanément et mises en mémoire dans le système d'acquisition 25.

Chaque armoire IPB 18 comporte donc un boîtier d'interface 23 pour chacun des câbles de captage et de mesure provenant de chacun des moyens de mesure de déplacement d'une barre de commande.

Chaque coffret d'interface 23 est relié au système d'acquisition 25 par l'intermédiaire d'un coffret d'isolement 24.

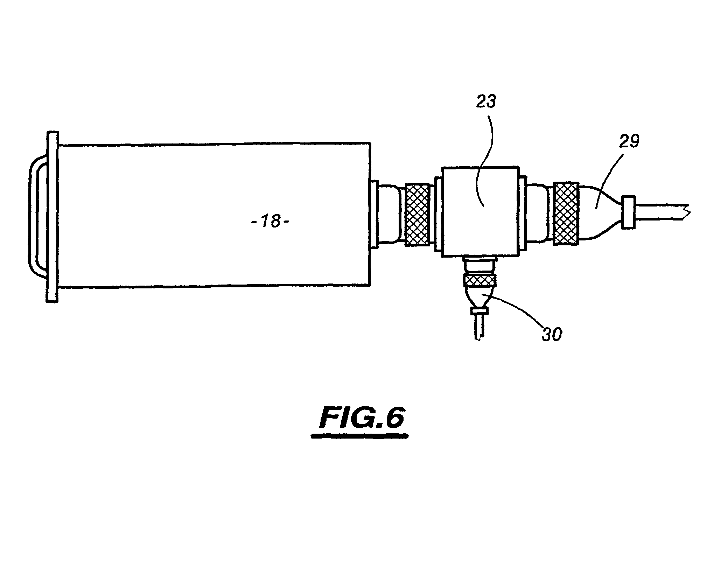

Sur la figure 6, on a représenté le châssis de l'armoire IPB 18 auquel est relié, par l'intermédiaire des boîtiers d'interface 23, chacun des câbles de mesure 29 associés au moyen de mesure de déplacement d'une barre de commande.

Un câble 30 permet de prélever les signaux de tension provenant des bobinages primaires des moyens de mesure pour les transmettre au système d'acquisition en temps réel, par l'intermédiaire d'un coffret d'isolement 24.

Chacun des boîtiers d'interface 23 comporte un atténuateur permettant d'adapter le niveau du signal transmis à l'électronique réalisant l'isolement galvanique des signaux dans le coffret d'isolement 24 et de protéger le circuit du bobinage primaire contre des risques de court-circuit.

Le coffret d'isolement galvanique 24 contient deux cartes d'isolement comportant chacune dix voies et supporte un isolement de 500 volts efficaces, la tension de sortie étant de 10 volts.

Les coffrets d'isolement 24, associés à chacun des sous-ensembles de barres de commande, permettent de bien séparer les fonctions de protection et de contrôle en évitant toute interférence électrique en provenance des composants qui ne sont pas classés pour la sûreté du réacteur nucléaire. Il n'y a donc pas de risque de perturber le fonctionnement des unités 19 de traitement de la protection du réacteur nucléaire à partir des mesures prélevées par les coffrets d'interface 23, dans les armoires IPB 18.

Dans son ensemble, l'interface IPB intégrant le dispositif de mesure suivant l'invention comporte au total soixante-treize boîtiers d'interface équipés d'atténuateurs, huit cartes électroniques d'isolement et quatre coffrets d'isolement.

Une seconde partie du dispositif de mesure suivant l'invention est placée à l'intérieur du local 20 de commande du déplacement des barres de commande. Dans ce local, ou local RGL, on réalise la commande de déplacement des grappes longues (RGL = Réacteur Grappes Longues), c'est-à-dire le contrôle de la montée et de la descente des grappes dans le réacteur nucléaire.

Le dispositif de mesure suivant l'invention comporte, à l'intérieur du local RGL, le système 25 d'acquisition en temps réel des signaux de mesure qui est relié d'une part, par l'intermédiaire de quatre coffrets d'isolement 24, aux quatre armoires IPB 18 et d'autre part, à l'intérieur du local RGL 20, à chacune des armoires EEC, c'est-à-dire des ensembles électroniques de commande des déplacements de grappes. De plus, le système d'acquisition 25 reçoit un signal 28 d'arrêt automatique du réacteur par retombée des grappes qui est prélevé sur un contact libre de l'unité de pilotage du réacteur nucléaire.

Un isolement galvanique de 500 volts efficaces est réalisé par des modules standard insérés dans un châssis du système d'acquisition de données 25, pour isoler de manière efficace le système d'acquisition des unités de commande de déplacement des grappes du local RGL.

Tous les signaux de mesure des bobinages primaires sont regroupés au niveau du système d'acquisition en temps réel 25 qui fournit, pour chacune des barres de commande, au moment de la chute de la barre de commande, une courbe donnant la tension induite dans le bobinage primaire en fonction du temps, cette courbe permettant de déterminer la durée du signal de tension et d'en déduire le temps de chute de la barre de commande.

Les données sont traitées par un micro-ordinateur 26 qui permet de déterminer le temps de chute des barres de commande et de les mettre en mémoire.

Les données d'entrée et les données fournies par le micro-ordinateur 26 relatives au temps de chute peuvent être imprimées sur une imprimante 27. Le micro-ordinateur 26 et l'imprimante 27 constituent donc des moyens permettant d'afficher et d'imprimer les résultats relatifs au temps de chute des barres de commande.

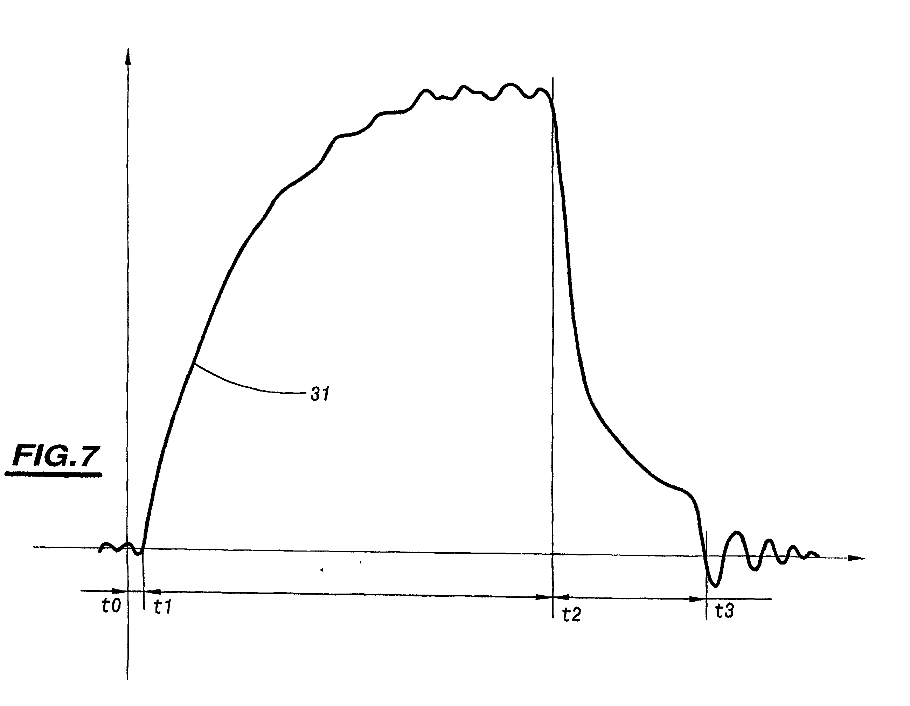

Sur la figure 7, on a représenté, dans un diagramme donnant la tension en fonction du temps, la courbe de tension induite dans un bobinage primaire d'une enceinte tubulaire d'une barre de commande, pendant la chute de la barre de commande.

Le déplacement de la tige de commande à l'intérieur de l'enceinte tubulaire et à l'intérieur du bobinage primaire produit un changement dynamique de la réluctance du bobinage et donc une tension induite aux bornes du bobinage primaire.

Le signal représentatif de cette tension induite varie en fonction du temps, lors de la chute de la barre de commande, cette variation étant représentée par la courbe 31 sur la figure 7.

Sur la figure 7, on a porté sur l'axe des abscisses les temps t0, t1, t2 et t3. Le temps t0 correspond à l'origine de temps pour la mesure du temps de chute. Ce temps t0 peut être déterminé de différentes manières. Tout d'abord, le temps t0 peut être déterminé à partir du signal 28 d'arrêt d'urgence du réacteur nucléaire qui est transmis au système d'acquisition 25.

Le temps t0 peut également être déterminé à partir des signaux de courant 32 qui sont transmis par les armoires 21 du local RGL du système d'acquisition 25. Ces signaux 32 correspondent au courant d'alimentation des grappins fixes des mécanismes de déplacement des barres de commande assurant la retenue des tiges et des barres de commande. L'annulation du courant d'alimentation du grappin fixe traduit l'instant de libération de la barre de commande. Enfin, l'origine de la chute de la barre de commande peut également être déterminée à partir de l'allure de la courbe de tension induite 31 en fonction du temps, de manière purement graphique.

Jusqu'au temps t1 et pendant une très courte durée T4 de t0 à t1, la tension induite dans le bobinage primaire reste pratiquement constante, ce qui traduit l'inertie du système au moment de la libération de la barre de commande. A partir du temps t1 et jusqu'au temps t2, la tension induite augmente et se stabilise pendant une durée T5 allant du temps t1 au temps t2. Cette phase de la chute de la barre de commande se traduit par une accélération de la tige de commande et une sortie de la tige de commande de l'enceinte tubulaire et du bobinage primaire, ces deux phénomènes se compensant pour atteindre une stabilisation à un niveau haut de la tension induite. Ensuite, du temps t2 au temps t3 pendant une durée T6, la tension induite diminue pour revenir à un niveau sensiblement égal au niveau de départ, avec une certaine instabilité. On considère que la chute est terminée, lorsque la tension induite revient pour la première fois au niveau de départ.

Cette phase, au cours de laquelle la tension induite est décroissante traduit la sortie de la tige de commande de l'enceinte tubulaire et du bobinage primaire.

Le temps de chute est déterminé en additionnant les temps T4, T5 et T6.

Le bobinage primaire est généralement alimenté en courant alternatif à une fréquence de 50 Hz et à une tension de 50 à 70 V. La tension induite est un signal à très basse fréquence (#10 Hz) et d'une amplitude de quelques volts suivant la position initiale de la barre de commande au moment de sa libération.

Pour obtenir la courbe de tension induite (telle que représentée sur la figure 7), il faut réaliser un filtrage de la tension captée, pour s'affranchir de la tension d'alimentation.

Dans le cas où le bobinage primaire n'est pas alimenté, on capte directement la tension induite aux bornes du bobinage primaire.

Le dispositif suivant l'invention permet de réaliser des mesures précises du temps de chute des barres de commande avec un nombre très réduit de mesures, par exemple une ou deux mesures, les signaux relatifs à l'ensemble des barres pouvant être enregistrés en une seule opération puis traités après mise en mémoire.

Le procédé suivant l'invention présente l'avantage d'éviter toute opération de connexion et de déconnexion de lignes de mesure, avant et après les mesures de temps de chute.

Le dispositif suivant l'invention présente également l'avantage de pouvoir effectuer des mesures pendant le fonctionnement du réacteur nucléaire et dans le cas de la chute accidentelle d'une barre de commande, le signal de tension induite étant alors enregistré de manière automatique par le système d'acquisition des signaux en temps réel.

L'invention ne se limite pas au mode de réalisation qui a été décrit.

C'est ainsi que les différentes connexions du dispositif de mesure suivant l'invention avec des unités utilisées pour la protection ou la commande du réacteur nucléaire peuvent être différentes de celles qui ont été décrites.

L'invention s'applique dans le cas de tout réacteur nucléaire comportant des barres de commande constituées de grappes de commande qui sont déplacées verticalement dans le coeur d'un réacteur nucléaire par l'intermédiaire de tiges de commande.

## Revendications

1. Dispositif de mesure du temps de chute d'une barre de commande à l'intérieur du coeur d'un réacteur nucléaire comportant une cuve (1) fermée à sa partie supérieure par un couvercle (1a) et renfermant le coeur (2) du réacteur constitué par des assemblages de combustible dans des dispositions adjacentes verticales et comportant des tubes de guidage verticaux (3) pour des crayons absorbants d'une pluralité de barres de commande (5) constituées chacune par une grappe de crayons absorbants (4) et une tige de commande (6) reliée, à l'une de ses extrémités, à la grappe de commande (4), une pluralité d'enceintes tubulaires (7) disposées verticalement au-dessus du couvercle (1a) de la cuve (1) comportant chacune un mécanisme de déplacement (8) d'une barre de commande par l'intermédiaire de sa tige de commande (6) verticale, dans la direction verticale axiale de l'enceinte tubulaire (7), et de libération de la barre de commande (5) pour assurer sa chute en position d'insertion maximale dans le coeur (2) du réacteur nucléaire, au moins un bobinage électrique (9) de mesure entourant chaque enceinte tubulaire (7), sensiblement suivant toute sa longueur axiale, relié à un câble de captage (29) d'une tension électrique aux bornes du bobinage, les barres de commande (5) étant regroupées en sous-ensembles et chaque bobinage électrique (9) de chacune des barres d'un sous-ensemble étant relié par son câble de captage à une unité de recueil (18) des signaux de mesure, **caractérisé par le fait qu'**il comporte de plus :
- un module (25) d'acquisition de signaux de mesure en temps réel,
- des moyens (23, 30, 24) de connexion de chacun des câbles de captage (29) de chacun des bobinages électriques de mesure (9) au module d'acquisition (25) pour la réception de signaux de mesure de tension aux bornes de chacun des bobinages électriques (9), et
- des moyens d'exploitation (26, 27) des signaux de tension reliés au module d'acquisition (25) pour mesurer le temps de chute des barres de commande (5) du réacteur nucléaire.

2. Dispositif suivant la revendication 1, **caractérisé par le fait que** chaque unité de recueil des signaux de mesure (18) est constituée par une armoire renfermant une pluralité de capteurs (18a) d'instrumentation de position des barres de commande du réacteur et que les moyens de connexion (23, 24) comportent un boîtier d'interface (23) pour chacun des câbles de mesure de chacun des bobinages électriques (9), disposé dans l'armoire des capteurs d'instrumentation de position des barres (18) auquel est relié un câble (30) de prélèvement d'une tension induite aux bornes du bobinage électrique (9) disposé autour de l'enceinte annulaire (7) de la barre de commande (5).

3. Dispositif suivant la revendication 2, **caractérisé par le fait que** les moyens de connexion comportent au moins un boîtier d'isolement (24) auquel sont reliés les câbles (30) de prélèvement de la tension induite aux bornes du bobinage électrique (9) d'une partie au moins des barres de commande (5), le module d'acquisition de signaux (25) étant relié à l'au moins un boîtier d'isolement (24).

4. Dispositif suivant l'une quelconque des revendications 2 et 3, **caractérisé par le fait qu'**il comporte quatre armoires (18) renfermant des capteurs (18a) d'instrumentation de position des barres de commande du réacteur nucléaire associées chacune à une partie du coeur (2) du réacteur nucléaire ayant une section en forme de quadrant, le coeur du réacteur nucléaire comportant quatre quadrants (2a, 2b, 2c, 2d) délimités par deux plans de symétrie perpendiculaires entre eux passant par l'axe vertical (2) du coeur du réacteur nucléaire, les bobinages électriques de mesure (9) de chacune des barres de commande dans une partie du coeur (2) du réacteur nucléaire étant reliés à l'une des quatre armoires (18) renfermant des capteurs (18a) d'instrumentation de position des barres de commande et les boîtiers d'interface (23) reliés aux câbles de captage (29) des bobinages électriques (9) des barres de commande (5) étant disposés dans les armoires (18) renfermant les capteurs (18a) d'instrumentation de position des barres.

5. Dispositif suivant la revendication 4, **caractérisé par le fait qu'**il comporte quatre coffrets d'isolement galvanique (24) par l'intermédiaire de chacun desquels les coffrets d'interface (23) de prélèvement des signaux de mesure des barres de commande dans une partie du coeur (2) sont reliés au module d'acquisition de signaux (25).

6. Dispositif suivant l'une quelconque des revendications 1 à 5, **caractérisé par le fait que** les moyens de connexion (23, 30, 24) de chacun des câbles de captage (29) de chacun des bobinages électriques de mesure (9) sont disposés à l'intérieur de locaux de protection (17) du réacteur nucléaire et que le module d'acquisition de signaux de mesure (25) et les moyens d'exploitation des signaux (26, 27) sont disposés dans un local (20) de commande de déplacement des barres de commande (5).

7. Dispositif suivant l'une quelconque des revendications 1 à 6, **caractérisé par le fait que** les moyens d'exploitation des signaux de tension reliés au module d'acquisition (25) comportent un micro-ordinateur (26) de calcul du temps de chute des barres de commande (5).

8. Dispositif suivant l'une quelconque des revendications 1 à 7, **caractérisé par le fait que** les bobinages électriques de mesure (9) sont constitués par des bobinages primaires (11) de dispositifs de mesure de déplacement des barres de commande (5).

## Patentansprüche

1. Vorrichtung zum Messen der Eintrittszeit eines Steuerstabs in den Core eines Kernreaktors mit einem an seinem oberen Abschnitt durch einen Deckel (1a) verschlossenen Behälter (1), der den Core (2) des Reaktors enthält, welcher aus vertikal nebeneinander angeordneten Brennstoffkassetten gebildet ist, und mit vertikalen Führungsrohren (3) für Absorberstäbe mehrerer Steuerstäbe (5), die jeweils von einem Bündel von Absorberstäben (4) und einer Steuerstange (6) gebildet werden, die an einem ihrer Enden mit dem Steuerbündel (4) verbunden ist, wobei mehrere vertikal über dem Deckel (1a) des Behälters (1) angeordnete rohrförmige Einfassungen (7) jeweils einen Mechanismus (8) zum Verschieben eines Steuerstabs in axialer vertikaler Richtung der rohrförmigen Einfassung (7) über seine vertikale Steuerstange (6) und zum Freigeben des Steuerstabs (5) aufweisen, um seinen Einfall in die maximale Einfügeposition im Core (2) des Kernreaktors sicherzustellen, wobei jede rohrförmige Einfassung (7) im Wesentlichen über ihre gesamte axiale Länge von mindestens einer elektrischen Messwicklung (9) umgeben ist, die mit einem Kabel (29) zum Abgreifen einer elektrischen Spannung an den Anschlüssen der Wicklung verbunden ist, wobei die Steuerstäbe (5) in Untereinheiten angeordnet und jede elektrische Wicklung (9) jedes Stabs einer Untereinheit über ihr Abgriffskabel mit einer Einheit (18) zum Sammeln der Messsignale verbunden sind, **dadurch gekennzeichnet, dass** sie außerdem Folgendes aufweist:
- ein Modul (25) zum Erfassen der Messsignale in Echtzeit,
- Mittel (23, 30, 24) zum Verbinden jedes der Abgriffskabel (29) jeder elektrischen Messwicklung (9) mit dem Erfassungsmodul (25) zur Aufnahme der an den Anschlüssen jeder elektrischen Wicklung (9) gemessenen Spannungswerte, und
- Mittel (26, 27) zum Verarbeiten der Spannungssignale, die mit dem Erfassungsmodul (25) verbunden sind, um die Eintrittszeit der Steuerstäbe (5) des Kernreaktors zu messen.

2. Vorrichtung nach Anspruch 1, **dadurch gekennzeichnet, dass** jede Einheit zum Sammeln der Messsignale (18) aus einem Schrank gebildet ist, der mehrere Sensoren (18a) für die Lage der Steuerstäbe des Reaktors einschließt, und dadurch, dass die Mittel zum Verbinden (23, 24) ein Schnittstellengehäuse (23) für jedes der Messkabel jeder elektrischen Wicklung (9) aufweisen, das im Schrank der Sensoren für die Lage der Stäbe (18) angeordnet ist und mit dem ein Kabel (30) zum Abgreifen einer an den Anschlüssen der Wicklung (9) induzierten Spannung verbunden ist, das um die ringförmige Einfassung (7) des Steuerstabs (5) herum angeordnet ist.

3. Vorrichtung nach Anspruch 2, **dadurch gekennzeichnet, dass** die Mittel zum Verbinden mindestens ein Isoliergehäuse (24) aufweisen, mit dem die Kabel (30) zum Abgreifen der induzierten Spannung an den Anschlüssen der elektrischen Wicklung (9) von mindestens einem Teil der Steuerstäbe (5) verbunden sind, wobei das Modul (25) zum Erfassen der Signale mit mindestens einem Isoliergehäuse (24) verbunden ist.

4. Vorrichtung nach einem der Ansprüche 2 und 3, **dadurch gekennzeichnet, dass** sie vier Schränke (18) aufweist, die Sensoren (18a) für die Lage der Steuerstäbe des Kernreaktors einschließen und jeweils zu einem Teil des Core (2) des Kernreaktors gehören, wobei der Querschnitt dieses Teils die Form eines Quadranten besitzt und der Core des Kernreaktors vier Quadranten (2a, 2b, 2c, 2d) aufweist, die von zwei zueinander senkrechten Symmetrieebenen festgelegt werden, die durch die vertikale Achse (2) des Core des Kernreaktors verlaufen, wobei die elektrischen Messwicklungen (9) jedes der Steuerstäbe in einem Teil des Core (2) des Kernreaktors mit einem der vier Schränke (18) verbunden sind, die Sensoren (18a) für die Lage der Steuerstäbe einschließen, und wobei die mit den Abgriffskabeln (29) der elektrischen Wicklungen (9) der Steuerstäbe verbundenen Schnittstellengehäuse (23) in den Schränken (18) angeordnet sind, die die Sensoren (18a) für die Lage der Stäbe einschließen.

5. Vorrichtung nach Anspruch 4, **dadurch gekennzeichnet, dass** sie vier Gehäuse zur galvanischen Isolierung (24) aufweist, über die die Schnittstellengehäuse (23) zum Abgreifen der Messsignale der Steuerstäbe in einem Teil des Core (2) mit dem Modul (25) zum Erfassen von Signalen verbunden sind.

6. Vorrichtung nach einem der Ansprüche 1 bis 5, **dadurch gekennzeichnet, dass** die Mittel zum Verbinden (23, 30, 24) jedes Abgriffskabels (29) jeder elektrischen Messwicklung (9) innerhalb von Schutzbereichen (17) des Kernreaktors angeordnet sind und dass das Modul (25) zum Erfassen von Messsignalen und die Mittel (26, 27) zum Verarbeiten der Signale in einem Bereich (20) angeordnet sind, in dem die Verschiebung der Steuerstäbe (5) gesteuert wird.

7. Vorrichtung nach einem der Ansprüche 1 bis 6, **dadurch gekennzeichnet, dass** die Mittel zum Verarbeiten der Spannungssignale, die mit dem Erfassungsmodul (25) verbunden sind, einen Mikrocomputer (26) zum Berechnen der Eintrittszeit der Steuerstäbe (5) aufweisen.

8. Vorrichtung nach einem der Ansprüche 1 bis 7, **dadurch gekennzeichnet, dass** die elektrischen Messwicklungen (9) von primären Wicklungen (11) von Vorrichtungen zum Messen der Verschiebung der Steuerstäbe (5) gebildet werden.

## Claims

1. Device for measuring the dropping time of a control rod in a nuclear reactor core, comprising a vessel (1) which is closed at its upper portion by a cover (1a) and containing the reactor core (2) which is formed by fuel assemblies in adjacent vertical dispositions and comprising vertical guide tubes (3) for absorbent rods of a plurality of control rods (5), each formed by a cluster of absorbent rods (4) and an operating rod (6) connected at one of its ends to the control cluster (4), a plurality of tubular shells (7) disposed vertically above the cover (1a) of the vessel (1), each comprising a mechanism (8) for displacing a control rod by means of its vertical operating rod (6) in the vertical axial direction of the tubular shell (7) and a mechanism for releasing the control rod (5) in order to ensure its dropping into the maximum insertion position in the core (2) of the nuclear reactor, at least one measuring electrical winding (9) surrounding each tubular shell (7), substantially along its entire axial length, connected to a cable (29) for picking up an electrical voltage at the terminals of the winding, the control rods (5) being re-grouped in sub-assemblies and each electrical winding (9) of each of the control rods of one sub-assembly being connected by its pick-up cable to a unit (18) for collecting measurement signals, **characterised in that** it comprises furthermore:
- a unit (25) for acquiring measurement signals in real time,
- means (23, 30, 24) for connecting each of the pick-up cables (29) from each of the measuring electrical windings (9) to the acquisition unit (25) for receiving voltage measurement signals at the terminals of each of the electrical windings (9), and
- means (26, 27) for exploiting voltage signals connected to the acquisition unit (25) in order to measure the dropping time of the control rods (5) of the nuclear reactor.

2. Device according to claim 1, **characterised in that** each unit (18) for collecting measurement signals is formed by a cabinet containing a plurality of instrumentation sensors (18a) for the position of the control rods of the reactor and **in that** connection means (23, 24) comprise an interface housing (23) for each of the measurement cables from each of the electrical windings (9), disposed in the cabinet for the instrumentation sensors for the position of the rods (18) to which there is connected a cable (30) for taking a voltage induced at the terminals of the electrical winding (9) disposed around the tubular shell (7) of the control rod (5).

3. Device according to claim 2, **characterised in that** the connection means comprise at least one insulation housing (24) to which there are connected the cables (30) for taking the voltage induced at the terminals of the electrical winding (9) of a portion at least of the control rods (5), the unit (25) for acquiring signals being connected to at least one insulation housing (24).

4. Device according to any of the claims 2 and 3, chazacterised in that it comprises four cabinets (18) containing the instrumentation sensors (18a) for the position of the control rods of the nuclear reactor, each associated with a portion of the core (2) of the nuclear reactor having a section in the form of a quadrant, the core of the nuclear reactor comprising four quadrants (2a, 2b, 2c, 2d) delimited by two planes of symmetry which are perpendicular to each other and pass through the vertical axis (2) of the core of the nuclear reactor, the electrical measuring windings (9) for each of the control rods in one portion of the core (2) of the nuclear reactor being connected to one of the four cabinets (18) containing the instrumentation sensors (18a) for the position of the control rods and the interface housings (23) connected to the pick-up cables (29) of the electrical windings (9) of the control rods (5) being disposed in the cabinets (18) containing the instrumentation sensors (18a) for the position of the rods.

5. Device according to claim 4, **characterised in that** it comprises four galvanic insulation cabinets (24) by means of each of which the interface cabinets (23) for taking the measurement signals of the control rods in one portion of the core (2) are connected to the unit (25) for acquiring signals.

6. Device according to any of the claims 1 to 5, **characterised in that** the connection means (23, 30, 24) of each of the pick-up cables (29) of each of the electrical measuring windings (9) are disposed in protection locations (17) of the nuclear reactor and **in that** the unit (25) for acquiring measurement signals and the means (26, 27) for exploiting signals are disposed in a location (20) for control of the displacement of the control rods (5).

7. Device according to any of the claims 1 to 6, **characterised in that** the means for exploiting voltage signals connected to the acquisition unit (25) comprise a microprocessor (26) for calculating the dropping time of the control rods (5).

8. Device according to any of the claims 1 to 7, **characterised in that** the electrical measuring windings (9) are formed by primary windings (11) of devices for measuring the displacement of the control rods (5).
